(19) Europäisches Patentamt
European Patent Office
Office européen des brevets

(11) **EP 1 979 764 B1**

(12) **EUROPÄISCHE PATENTSCHRIFT**

(45) Veröffentlichungstag und Bekanntmachung des Hinweises auf die Patenterteilung:
**25.04.2012 Patentblatt 2012/17**

(51) Int Cl.:
*G01S 17/36* (2006.01)     *G01S 17/89* (2006.01)
*G01S 7/481* (2006.01)     *G01J 1/20* (2006.01)

(21) Anmeldenummer: **07702886.8**

(22) Anmeldetag: **19.01.2007**

(86) Internationale Anmeldenummer:
**PCT/EP2007/000454**

(87) Internationale Veröffentlichungsnummer:
**WO 2007/085382 (02.08.2007 Gazette 2007/31)**

(54) **VERFAHREN ZUR LICHTLAUFZEITMESSUNG**

METHOD FOR MEASURING THE TRANSIT TIME OF LIGHT

PROCÉDÉ DE MESURE DU TEMPS DE PROPAGATION DE LA LUMIÈRE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **24.01.2006 DE 102006003269**

(43) Veröffentlichungstag der Anmeldung:
**15.10.2008 Patentblatt 2008/42**

(73) Patentinhaber: **Mechaless Systems GmbH**
**76131 Karlsruhe (DE)**

(72) Erfinder:
• **REIME, Gerd**
**77815 Bühl (DE)**

• **LANGER, Peter**
**76227 Durlach/Karlsruhe (DE)**
• **MAYER, Bernd**
**76829 Landau (DE)**

(74) Vertreter: **Durm & Partner**
**Moltkestrasse 45**
**76133 Karlsruhe (DE)**

(56) Entgegenhaltungen:
**WO-A-2004/061639     DE-A1- 10 322 552**
**DE-A1- 10 350 489     DE-A1- 19 902 612**

**Beschreibung**

Gebiet der Erfindung

Die Erfindung betrifft ein Verfahren zur Lichtlaufzeitmessung, insbesondere für Kameras nach dem Oberbegriff des Anspruches 1.

Stand der Technik

In vielen Anwendungsbereichen muss die Entfernung eines Bezugsobjektes zu anderen Objekten bestimmt werden. Ein derartiger Einsatzbereich sind vor allem Kamerasysteme, z.B. auch im Fahrzeugbereich oder im Bereich der Robotik.

Hierbei ergibt sich nach dem Stand der Technik folgende Problematik: Legt man an eine Leuchtdiode eine gepulste Spannung an, so leuchtet sie im Rhythmus dieser angelegten Spannung. Ein reflektierender Gegenstand kann die abgestrahlte Lichtleistung zu einer Photodiode vorzugsweise in der Nähe der sendenden LED reflektieren. Das zurückgeworfene Signal ist in seiner Größe abhängig von der Sendeleistung der LED, dem Reflexionsgrad des Gegenstandes und dem Abstand des Gegenstandes von der sendenden LED. Bei einem Abstand eines reflektierenden Gegenstandes z.B. einer Hand, von z.B. einem Meter, der Verwendung einer haridelsüblichen LED mit z.B. 100mA Pulsstrom, einem Öffnungswinkel von z.B. 15° und einer haridelsüblichen Low-Cost Photodiode, z.B. BPW 34 von Osram, ergibt sich ein durch die Reflexion an der Hand hervorgerufener Photostrom von z.B. einigen μA in der Photodiode. Dieser Photostrom verändert sich natürlich mit dem Abstand des reflektierenden Gegenstandes, sodass er bei Entfernungen von größer einem Meter möglicherweise nur noch einige pA in der Photodiode beträgt. Um die Entfernung des reflektierenden Gegenstandes zu messen, bietet sich zwar eine Laufzeitmessung zwischen gesendetem und empfangenem Signal an, jedoch ist es bei den oben genannten sehr kleinen Empfangsströmen in der Photodiode sehr schwierig, den genauen Eintreffpunkt zu ermitteln.

Erschwerend kommt hinzu, dass das eintreffende Signal in der Photodiode bzw. den angeschlossenen Verstärkern nicht die Flankensteilheit erzeugt, mit der es ausgesandt wurde. Die Photodiode wirkt als Tiefpass, insbesondere wenn sie zur Erhöhung der Empfindlichkeit groß (große Empfangsfläche) gewählt wird. Die Lichtlaufzeit liegt bei etwa 15 cm Abstand bei etwa 1 ns. Aufgrund des Tiefpassverhaltens von oben genannter Photodiode und Vorverstärker kann die Anstiegszeit des Empfangssignals durchaus 10 μs betragen. Auch die sendende LED hat eine merkliche Anstiegszeit, jedoch liegt sie um Größenordnungen unter dem Tiefpassverhalten von Low-Cost Photodioden.

Das Detektieren des genauen Eintreffzeitpunktes des Reflexionssignals bereitet somit erhebliche Schwierigkeiten, und es beschäftigen sich viele Patentanmeldungen eben mit der Verbesserung der Detektion des genauen Eintreffzeitpunktes des Reflexionssignals.

Allgemein ist bekannt, dass sich größere Reflexionsabstände auf diesem Wege leichter bestimmen lassen, z.B. einige 10 bis 100 m. Weiterhin ist eine Messung ab ca. 3 m bis 250m einfacher als eine Messung im Nahfeld von 0-3m, da hier mit ns-Genauigkeit- gemessen werden muss, was wiederum Photodioden und Verstärker im GHz-Bereich nötig macht. Erschwerend kommt noch Fremdlicht, Temperatur und der jeweilige Reflexionsgrad des zu messenden Objekts hinzu. Diese Parameter gehen in der Regel stark in die Entfernungsmessung ein. Dabei werden aber in der Praxis oft ganz erhebliche Sendeleistungen (z.B. Laser, gepulst 10 W) eingesetzt.

Bekanntermaßen bleibt die Phasenverschiebung bei einem Mischvorgang zur Gewinnung der ZF-Frequenz erhalten. Wählt man diese Verfahren zur Laufzeit- und Entfernungsmessung, muss intensitätsmoduliertes Licht mit einer Modulationsfrequenz im 10MHz-Bereich empfangen und gemischt werden, was schnelle Photodioden und Vorverstärker erforderlich macht. Hohe Verstärkung bei gleichzeitig hoher Frequenz ist nur in einem begrenzten Rahmen möglich. Daher ist es sinnvoll, so früh wie möglich im Empfangspfad zu mischen. Übliche Mischer arbeiten jedoch nicht mit dem Photostrom.

So offenbart die dem Oberbegriff des Anspruches 1 zu Grunde liegende deutsche Patentanmeldung DE 199 02 612 A1 einen optoelektronischen Mischer, der aus einer Photodiode mit zwei separaten Elektroden besteht, an die eine amplitudenmodulierte Spannung angelegt wird, so dass der durch einen Lichtstrahl in der Photodiode erzeugte Photostrom mit der amplitudenmodulierten Spannung gemischt wird. Offenbart wird damit eine als Differenzdiode ausgeführte Multisegmentphotodiode, um die Wechselspannung eines Referenzfrequenzgenerators, also ein elektrisches Signal mit der Frequenz eines Lichtsignals zu mischen. Insbesondere wird gezeigt, dass dieser Mischer in einem Entfernungsmeßgerät verwendet werden kann, wobei ein Lichtsender ein amplitudenmoduliertes Lichtsignal zu einem zu vermessenden Objekt aussendet, ein Lichtsensor das von dem Objekt zurückkommende, reflektierte Lichtsignal erfasst und durch eine Auswerteeinheit die Phasenverschiebung zwischen dem ausgesandten und dem zurückkommenden Lichtsignal bestimmt wird. Der elektrooptische Mischer ermöglicht dabei die Umsetzung einer hohen Amplitudenmodulationsfrequenz in einen niedrigeren Frequenzbereich an einer Stelle im Signalpfad, an der noch keine breitbandige elektrische Verstärkung erfolgt ist.

Aus der DE 103 50 489 A1 ist ein optischen Sensor bekannt, in dem die Frequenz eines Empfangslichtstrahls mit der Frequenz eines elektrischen Signals in einer Avalanche-Photodiode gemischt wird.

Die WO 2004/061639 A1 offenbart eine optoelektronische Messanordnung mit einer Fremdlichtkompensation sowie ein Verfahren zur phasenkorrekten Kompensation eines Signals der Messanordnung. Dabei werden zwei Lichtstrahlen so geregelt, dass das Ausgangssignal einer Photodiode, auf welche die Lichtstrahlen fallen, einem Gleichstromsignal gleicht.

DE 100 06 493 A1 offenbart ein Verfahren und eine Vorrichtung zur optoelektronischen Entfernungsmessung, wobei zwei Lichtemitter und zwei Photodiodenempfänger zur Kalibrierung verwendet werden. Ein Teil der modulierten Leistung des Hauptemitters gelangt auf das Messobjekt und von dort in Form von Streulicht auf den Hauptphotoempfänger und ein weiterer Teil der Leistung des Hauptemitters direkt auf einen Referenzphotoempfänger gelangt, während ein Teil der modulierten Leistung des Referenzlichtemitters direkt auf den Hauptphotoempfänger und ein anderer Teil direkt auf den Referenzphotoempfänger geleitet wird.

Selbst wenn man den Zeitpunkt des Empfangssignals genau bestimmt hätte, tritt ein weiterer ungewollter Effekt auf. Zusätzliches Fremdlicht in der Photodiode verändert etwas die Amplitude und die Anstiegszeit des Empfangssignals, sodass auch die Entfernungsmessung durch Fremdlicht beeinflusst werden kann.

Aus der DE 103 22 552 A1 ist es bekannt, die an einem Objekt reflektierte Lichtstrahlung sowie die Lichtstrahlung aus einer zweiten Lichtstrecke, die von einem weiteren Sender oder einer Kompensationslichtquelle stammt, parallel oder winkelgleich dem Empfänger zuzuleiten. Wird nämlich Licht von einer Lichtquelle einerseits von vorne in die Photodiode eingestrahlt und von einer weiteren Lichtquelle seitlich eingekoppelt, so nimmt die Anstiegszeit bei einem Pulsstrom im Lichtsignal bei seitlicher Einkopplung deutlich zu. Damit hat Fremdlicht bei seitlicher Einkopplung einen wesentlich größeren Einfluss. Der bei vollständiger Kompensation entstehende dimensionslose Punkt auf der Lichtintensitäts-Photostromkennlinie wird damit wieder zu einer Fremdlichteinflüssen unterliegenden Strecke auf der Kennlinie der Photodiode. Optimal ist daher eigentlich ein gleicher Einfallswinkel für das Empfangs- und das Kompensationssignal. Die DE 103 22 552 A1 befasst sich allerdings nur mit einem Verfahren und einer Vorrichtung zum Messen eines modulierten Lichtsignals unter Kompensation von Fremdlichteinflüssen. Das bewusste Mischen zweier Lichtstrahlen in einer Photodiode wird nicht beschrieben.

Offenbarung der Erfindung

Ausgehend von diesem Stand der Technik liegt der vorliegenden Erfindung die Aufgabe zugrunde, ein Verfahren zur Lichtlaufzeitmessung zu schaffen, das insbesondere bei Kameras auch mit günstigeren Bauelementen und niederfrequenteren Verstärkern arbeiten kann.

Diese Aufgabe wird durch ein Verfahren mit den Merkmalen des Anspruches 1 gelöst.

Zur Mischung der getakteten Signale und damit zur Messung der Lichtlaufzeit wird die Modulation der Sensitivität einer Photodiode durch Fremdlicht und dies insbesondere bei Einstrahlung aus verschiedenen Winkeln ausgenutzt. Starkes Umgebungslicht verändert die Raumladungszone einer Photodiode, wodurch sich der Driftstrom erzeugende Absorptionsbereich vergrößert. Dies bewirkt insbesondere, aber nicht nur für Infrarotlicht eine Veränderung der Empfindlichkeit. Diese Modulation ist unabhängig von den Anschlusswiderständen und der Sperrschichtkapazität, da die absorbierten Fremdlichtphotonen eine Überschwemmung des Halbleiters mit Ladungsträgern bewirken und damit nicht den elektrischen Anschlusszeitkonstanten unterliegen, die geschwindigkeitsbestimmend sind. Als Mischprodukt entsteht der messbare Photostrom. Hierbei wirkt sich die Sperrschichtkapazität zusammen mit dem Anschlusswiderstand bereits als Tiefpass aus. Insgesamt resultierend gelangt somit hauptsächlich das Differenzmischprodukt zum nachfolgenden Verstärker.

Dieses Mischprodukt hat eine deutlich niedrigere Frequenz als die Taktfrequenz und kann bei bekannter Taktdifferenz zwischen den beiden Taktsteuerungen sehr genau erkannt werden. Gleichzeitig kann auch die Differenz der Taktsignale ermittelt werden, die sich ohne eine Lichtstrecke ergibt, indem die beiden Taktsignale ebenfalls gemischt werden. Vergleich man die beiden Mischprodukte ergibt sich eine messbare Phasenverschiebung bei geringerer Frequenz.

Ermöglicht wird eine Entfernungsmessung, die frei von Fremdlichtproblemen unabhängig vom Grad der Reflexion mit großflächigen Low-Cost Photodioden und Verstärkern geringer Bandbreite eine exakte Laufzeitmessung des Lichtes erlaubt. Des weiteren ist eine Laufzeitmessung im Nahbereich ab Sensoroberfläche bis hin zu größeren Entfernungen ohne Umschalten des Messbereichs möglich. Da diese Modulationstechnik auf alle Photodioden und vor allem auf alle Siliziumphotodioden anwendbar ist, können durch die Erfindung einer Vielzahl von aktiven optischen Sensoren 3-D-Eigenschaften gegeben werden

Weitere Vorteile ergeben sich aus den Unteransprüchen und der nachfolgenden Beschreibung.

Kurzbeschreibung der Figuren

Im Folgenden wir die Erfindung an Hand eines in den Figuren dargestellten Ausführungsbeispieles näher erläutert. Es zeigen:

Fig. 1    ein schematisches Schaltbild einer erfindungsgemäßen Schaltung zur Lichtlaufzeitmessung,

Fig. 2    eine schematische Darstellung eines durch Fremdlicht beeinflussten Empfangssignals.,

Fig. 3a    ein getaktetes Sendesignal einer LED,

Fig. 3b      verschiedene Signalverläufe des Empfangssignals je nach Winkeleinfall,

Fig. 4      eine Seitenansicht einer Photodiode,

Fig. 5      ein zugehöriges Kamerasystem,

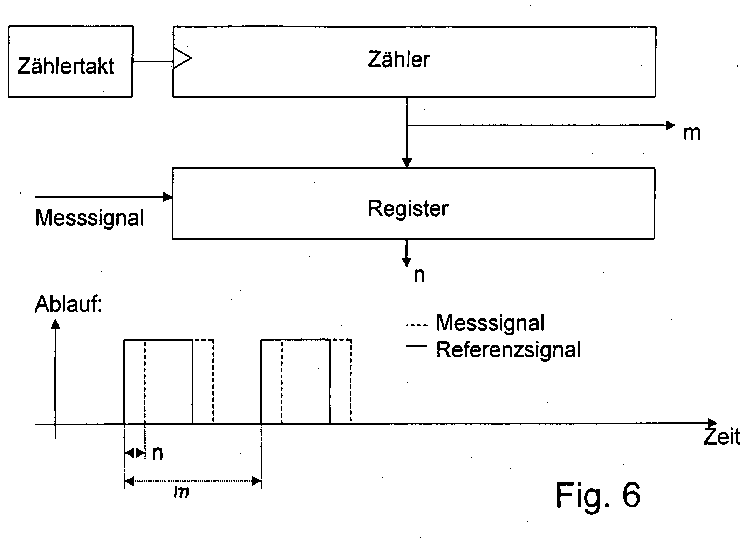

Fig. 6      eine schematische Darstellung einer Vorrichtung zur Bestimmung der Phasenverschiebung.

Ausführliche Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen

Bevor die Erfindung im Detail beschrieben wird, ist darauf hinzuweisen, dass sie nicht auf jeweiligen Bauteile der Schaltung oder die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung und in den Ansprüchen die Einzahl oder unbestimmte Artikel verwendet werden, bezieht sich dies auch auf die Mehrzahl dieser Elemente, solange nicht der Gesamtzusammenhang eindeutig etwas anderes deutlich macht.

Die im Folgenden erläuterte Modulationstechnik ist auf alle Photodioden und vor allem auf alle Siliziumphotodioden anwendbar, so dass damit einer Vielzahl von aktiven optischen Sensoren 3-D-Eigenschaften gegeben werden können.. Der bevorzugte Einsatzzweck sind Kameras 10, wenngleich die Erfindung im Folgenden nur unter Bezug auf ein Pixel 24 erläutert wird. Mögliche andere Einsatzbereiche sind im Automotive-Bereich z.B. die Park Distance Control oder das Lane Departure oder allgemein optische Entfernungsmesser oder optisches Radar.

Der vortiegenden.Erfindung liegt folgende Beobachtung zu Grunde:

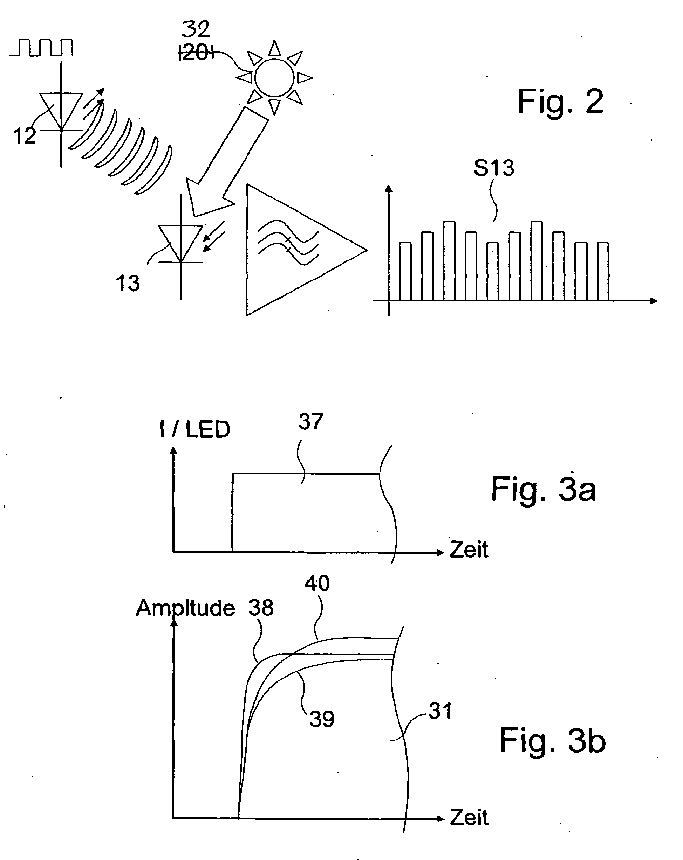

Grundsätzlich wird beim Einsatz von Photodioden das ausgesandte Licht nicht nur an dem Objekt O reflektiert, sondern auch an beliebigen, im Reflexionsbereich befindlichen Oberflächen. Dadurch entsteht im Empfänger ein ständiger getakteter Signalanteil. Dieses permanent vorhandene Signal kann in der Photodiode zusätzlich durch Fremdlicht in seiner Amplitude beeinflusst werden. So hängt gemäß Fig. 2 die Empfindlichkeit einer Photodiode von der eingestrahlten Gesamtlichtintensität ab (ambient light effect). Wird z.B. das Signal des Lichtsenders 12 wie einer Leuchtdiode mit Fremdlicht, wie dem Licht einer starken Lichtquelle 32 , z.B. der Sonne, überlagert, ist die Amplitude des Empfangssignals S13 von der Sonnenlichtstärke abhängig. Diesen Effekt zeigen mehr oder weniger alle Photodioden. Wird einfallendes Fremdlicht z. B. in seiner Intensität verändert, so ändert sich auch die Amplitude des empfangenen Signals. Somit kann nicht eindeutig unterschieden werden, ob sich die Entfernung zum Objekt ändert oder ob z. B. durch eine beliebige Abschattung oder Reflexion nur der Fremdlichtanteil beeinflusst wurde. Diese Fehlinterpretationen liegen daran, dass bei Empfang eines getakteten Signals durch eine Photodiode in der Kennlinie der Photodiode beständig ein Bereich überstrichen wird. Je nach Steilheit der Kennlinie ist das Delta des Photostroms verschieden groß, was wiederum zu einem unterschiedlichen Signalpegel führt. Damit verschiebt der Fremdlichtanteil den Mittelwert des Photostromdeltas auf der Kennlinie.

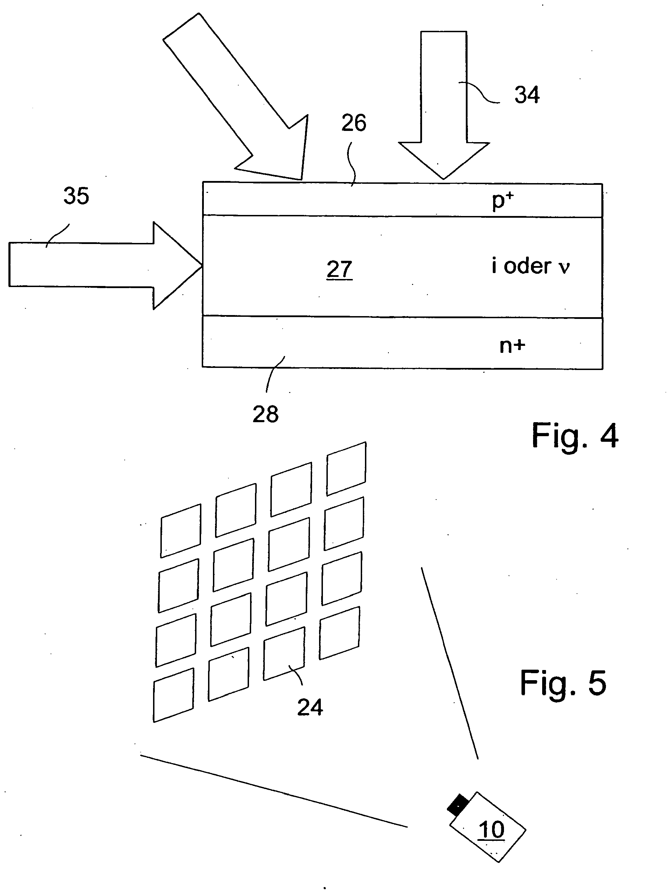

Dennoch stellt sich insbesondere bei entsprechenden Genauigkeitsanforderungen der durchzuführenden Messungen das Problem ein, dass Kompensationen nicht vollständig möglich sind, insbesondere wenn Licht nicht unmittelbar von vorne in die Photodiode 13 einfällt. Dies wird anhand der Figuren 3a und 3b erläutert. Bei einer Einkopplung eines Signals 31 durch eine Lichtquelle gemäß Pfeil 34 in Fig. 4 direkt von vorne in die Photodiode 13 wird bei einem Pulssprung 37 (Fig. 3a) die kürzeste Anstiegszeit erreicht. Diese wird auch in der Regel in den Datenblättern im Hinblick auf die entsprechende Photodiode angegeben. Weniger bekannt ist, dass bei seitlicher Einkopplung eines Signals durch eine Lichtquelle entlang Pfeil 35 in Fig. 4 die Anstiegszeit 39 bereits bei einem Einfallwinkel von 45° drastisch zunimmt. Zudem hat im Fall der seitlichen Einkopplung Fremdlicht einer Lichtquelle einen wesentlich größeren Einfluss auf die gemessene Amplitude und die Anstiegszeit 40. Physikalisch lässt sich dies gemäß Fig. 4 wie folgt erklären:

In das Halbleitermaterial der Photodiode einfallendes Licht erzeugt Ladungsträgerpaare. Diese Ladungsträgerpaare werden durch ein von außen angelegtes elektrisches Feld getrennt und den Anschlüssen zugeführt. Typischerweise wird hierzu eine PiN-Struktur verwendet. Das Substratmaterial 28 ist hier bei n-dotiert und rückseitig mit dem Leadframe leitend verbunden. Auf dem Substratmaterial befindet sich eine dünne Schicht von nahezu undotiertem (intrinsischem) Silizium. Hierauf liegt eine sehr dünne stark p-dotierte Schicht. Diese bildet die Anode der Photodiode. Legt man nun eine Spannung an die in Sperrrichtung gepolte Photodiode an, so entsteht in der intrinsischen Zone ein starkes elektrisches Feld. Senkrecht auf die Photodiode einfallendes Licht durchdringt die p-Zone 26 und generiert in der i-Zone 27 Ladungsträgerpaare. Diese werden durch das anliegende elektrische Feld getrennt und erzeugen den messbaren Photostrom. Hierbei handelt es sich somit um einen Driftstrom. Aufgrund der Beschleunigung der Ladungsträger gelangen diese schnell zu den Anschlüssen. Üblicherweise mit der Sättigungsgeschwindigkeit für Elektronen bzw. Löcher in Silizium.

Licht, das hingegen seitlich auf die Photodiode fällt, erzeugt Ladungsträger im Substrat oder der intrinsischen Zone 27, allerdings außerhalb oder im Randbereich des elektrischen Feldes. Die so erzeugten Ladungsträger diffundieren mit geringen Wirkungsgrad langsam zum elektrischen Feld und werden dort dem messbaren Photostrom zugeführt. Aufgrund der größeren Zeitkonstante der Ladungsträgerdiffusion ergibt sich so eine wesentlich größerer Zeitkonstante der Sprungantwort. Bei typischen Photodioden ergeben sich für seitlich einfallendes Licht eine etwa um den Faktor 20 größere Zeitkonstante, die das Empfangssignal stark verzerrt bzw. in der Phasenlage verschiebt.

Dieser Effekt ist umso stärker ausgeprägt, je schlechter die Kante der Photodiode geschützt ist. Photodioden, die am Rand eine starke Dotierung aufweisen (z.B. einen Guard-Ring) sind hiervon kaum betroffen. Es ist aber bei nahezu allen Photodioden eine Winkelabhängigkeit der Anstiegszeit zu beobachten, da Licht je nach Einfallswinkel, auch wenn der Lichtstrahl vollständig durch die p-Zone einfällt, unterschiedlich tief in die i-Zone eindringt. Insbesondere wird bei schräg einfallendem Licht ein Teil der Ladungsträgerpaare bereits in der p-Zone generiert. Diese Ladungsträger diffundieren langsam zur i-Zone, wodurch sich die messbare Anstiegszeit ebenfalls verlängert.

Somit sind für die Geschwindigkeit einer Photodiode eine Vielzahl von einzelnen Vorgängen verantwortlich. Lediglich für nahezu senkrecht einfallendes Licht ist die elektrische Zeitkonstante der Photodiode (Produkt aus Widerstand im Empfangskreis und Sperrschichtkapazität) dominierend. Sowie der Diffusionsphotostrom einen wesentlichen Beitrag zum Photostrom liefert ist diese Zeitkonstante nicht mehr dominierend und die Photodiode wird messbar langsamer.

Zur Mischung der getakteten Signale und damit zur Messung der Lichtlaufzeit wird die Modulation der Sensitivität einer Photodiode durch Fremdlicht und dies insbesondere bei Einstrahlung aus verschiedenen Winkeln ausgenutzt. Starkes Umgebungslicht verändert die Raumladungszone einer Photodiode, wodurch sich der Driftstrom erzeugende Absorptionsbereich vergrößert. Dies bewirkt insbesondere, aber nicht nur für Infrarotlicht eine Veränderung der Empfindlichkeit. Diese Modulation ist unabhängig von den Anschlusswiderständen und der Sperrschichtkapazität, da die absorbierten Fremdlichtphotonen eine Überschwemmung des Halbleiters mit Ladungsträgern bewirken und damit nicht den elektrischen Anschlusszeitkonstanten unterliegen, die geschwindigkeitsbestimmend sind. Als Mischprodukt entsteht der messbare Photostrom. Hierbei wirkt sich die Sperrschichtkapazität zusammen mit dem Anschlusswiderstand bereits als Tiefpass aus. Insgesamt resultierend gelangt somit hauptsächlich das Differenzmischprodukt zum nachfolgenden Verstärker.

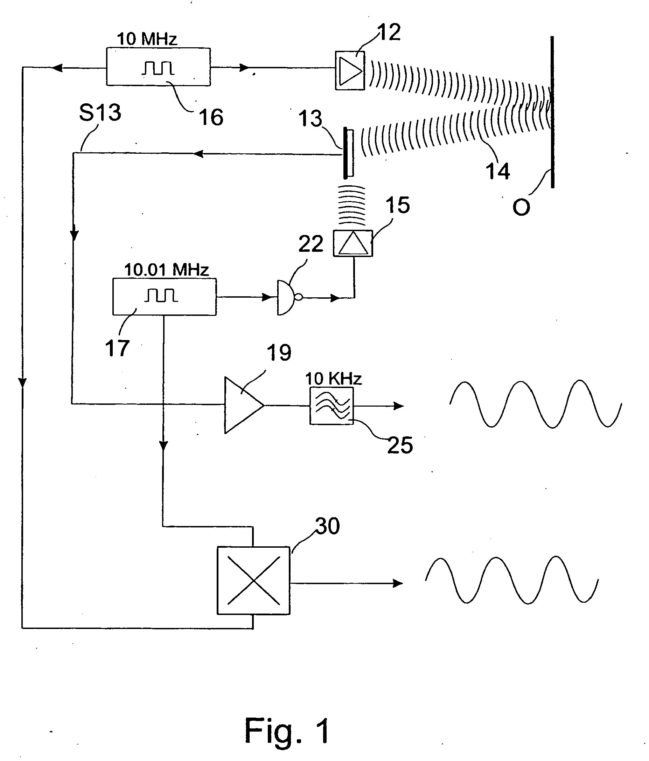

Dieser Effekt wird erfindungsgemäß zur Messung der Lichtlaufzeit ausgenutzt. Gemäß Fig. 1 wird ein von einer ersten Taktsteuerung 16 im Beispiel mit 10 MHz getaktetes erstes Lichtsignal von wenigstens einem Lichtsender 12 in eine Lichtstrecke 14 ausgestrahlt und über ein rückstrahlendes Objekt O an eine Photodiode 13 reflektiert. Der Empfänger 13, vorzugsweise eine Photodiode empfängt dieses Lichtsignal von vom vorzugsweise frontal. Parallel wird ein von einer weiteren Taktsteuerung 17 getaktetes, weiteres Lichtsignal in einem Winkel zum ersten Lichtsignal, vorzugsweise seitlich in die Photodiode (13) eingestrahlt und dort mit dem ersten Lichtsignal zu einem gemeinsamen Empfangssignal (S13) gemischt. Die Taktfrequenz der weiteren Taktsteuerung beträgt im Beispiel 10,01 MHz und besitzt damit eine Taktdifferenz zum ersten Takt von 10 KHz, kann aber auch eine andere Differenz zum ersten Takt haben. Vorzugsweise ist die Taktdifferenz zwischen dem Takt der ersten Taktsteuerung 16 und der zweiten Taktsteuerung 17 um wenigstens zwei Zehnerpotenzen kleiner als deren Takt. In der Photodiode werden die empfangenen Signale gemischt, so dass das gemeinsame Empfangssignal S13 mit einem Filter 25, dessen Frequenzgang der Frequenz der Taktdifferenz entspricht, zu einem Filtersignal gefiltert werden kann.

Die Taktsignale selbst der ersten Taktsteuerung 16 und der weiteren Taktsteuerung 17 werden aber auch unmittelbar in einem Mischer 30 ebenfalls zu einem Mischsignal gemischt und anschließend mit dem gefilterten Empfangssignal der Photodiode 13 verglichen. Die Phasenverschiebung zwischen dem Mischsignal der Taktsteuerungen 16,17 und dem Filtersignal kann damit bei einer Frequenz zur Bestimmung der Lichtlaufzeit verwendet werden, die deutlich geringer ist als die Frequenz der Taktsteuerungen, so dass eine erhöhte Genauigkeit der Laufzeit- und damit Entfernungsmessung möglich wird.

Bei einer Kamera 10 kann dies zudem gleichzeitig zur Bilderkennung erfolgen, so dass für jedes Pixel schnell die relevante Entfernung vorliegt. Dies erhöht die Qualität der Bilderkennung.

Der Winkel zwischen dem Einstrahlungswinkel des ersten Lichtsignals und des weiteren Lichtsignals beträgt üblicherweise mehr als 45°, vorzugsweise mehr als 70°, besonders bevorzugt jedoch etwa 90°.

Grundsätzlich hängt die Empfangssignalamplitude des Empfangssignals S13 von der Objektentfernung, der Objektgröße und dem Objektreflexionsgrad ab. Die Phase des Empfangssignals hängt von der Laufstrecke ab. Damit ergibt sich auf Grund der Mischung in der Photodiode 13 und im Mischer 30 eine Phasenverschiebung, die leicht zur Bestimmung der Lichtlaufzeit verwendet werden kann.

Zudem hat sich herausgestellt, dass das Ergebnis auch durch die Wellenlänge des Lichts positiv beeinflusst werden kann. Senden Lichtsender 12 und weiterer Lichtsender 15 im Infrarot-Wellenlängenbereich ergibt sich bereits ein gutes Ergebnis. Dieses Ergebnis kann weiter verbessert werden, wenn einer der beiden Lichtsender 12 bzw. weitere Lichtsender 15 mit einer Wellenlänge im Infrarotbereich und der andere mit einer Wellenlänge im Rotbereich sendet oder noch besser mit einer Wellenlänge im Blaubereich.

Laufzeit t für Licht über Objekt O im Abstand d bis Photodiode

$$t = 2 * d / c_0$$

Dies bedeutet für die Intensitätsmodulation mit $f_0$ eine Phasenverschiebung von f :

$$\varphi = t \, f_0 \, 360°$$

Diese Phasenverschiebung transformiert sich in den ZF Bereich und kann dort bestimmt werden zu:

$$\varphi = \frac{n}{m} \, 360°$$

mit: n = Phasenverschiebung
m = Taktabstand

Aus den Messgrößen m und n bestimmt sich der Abstand d zu:

$$d = \frac{c_0 * n}{2 * m * f_0}$$

Bezugszeichenliste

| 10 | Kamera |
|---|---|
| 12 | Lichtsender |
| 13 | Photodiode |
| S13 | Empfangssignal |
| 14 | Lichtstrecke |
| 15 | weiterer Lichtsender |
| 16 | Taktgeber für 12 |
| 17 | Taktgeber für 15 |
| 19 | Verstärker |
| 22 | Inverter |
| 24 | Pixel |
| 25 | Filter |
| 26 | p-Zone |
| 27 | i-Zone |
| 28 | Substrat |
| 30 | Mischer |
| 31 | Signal |
| 32 | starke Lichtquelle |
| 34 | Pfeil bei 0° Einfallswinkel (frontal) |
| 35 | Pfeil bei 90° Einfallswinkel (seitlich) |
| 37 | Elektrischer Pulssprung zur Lichtquelle |
| 38 | Sprungantwort bei 0° Einfallswinkel |
| 39 | Sprungantwort bei 45° Einfallswinkel |
| 40 | Sprungantwort bei 90° Einfallswinkel |

**Patentansprüche**

1. Verfahren zur Lichtlaufzeitmessung, insbesondere für Kameras (10), mit den Schritten:

- Senden eines von einer ersten Taktsteuerung (16) getakteten ersten Lichtsignals von wenigstens einem Lichtsender (12) in eine Lichtstrecke (14) über ein rückstrahlendes Objekt (O) an eine Photodiode (13),
- Ermitteln eines Empfangssignals in Folge des ersten Lichtsignals am Empfänger (13),
- Einkoppeln eines von einer weiteren Taktsteuerung (17) getakteten, weiteren Lichtsignals und Mischen mit dem ersten Lichtsignal zu einem gemeinsamen Empfangssignal (S13),
- Filtern des gemeinsamen Empfangssignals (S13) mit einem Filter (25), dessen Frequenzgang einer Frequenz einer Taktdifferenz entspricht, zu einem Filtersignal,

- Verwenden des Empfangssignals aus der Lichtstrecke (14) zur Bestimmung der Lichtlaufzeit, mit den Schritten:

- Mischen der Taktsignale der ersten Taktsteuerung (16) und der weiteren Taktsteuerung (17) ebenfalls zu einem Mischsignal in einem Mischer (30), und

- Verwenden der Phasenverschiebung zwischen dem Mischsignal der Taktsteuerungen (16,17) und dem Filtersignal zur Bestimmung der Lichtlaufzeit

**dadurch gekennzeichnet, dass**

- das weitere Lichtsignal in einem Winkel zum ersten Lichtsignal in die Photodiode (13) eingestrahlt wird,

das Mischen des ersten Lichtsignals mit dem weiteren Lichtsignal in der Photodiode erfolgt.

2. Verfahren nach Anspruch 1, **dadurch gekennzeichnet, dass** das erste Lichtsignal im Wesentlichen frontal und das weitere Lichtsignal im Wesentlichen seitlich in die Photodiode (13) eingestrahlt wird.

3. Verfahren nach Anspruch 2, **dadurch gekennzeichnet, dass** der Winkel zwischen dem Einstrahlungswinkel des ersten Lichtsignals und des weiteren Lichtsignals mehr als 45°, vorzugsweise mehr als 70°, besonders bevorzugt jedoch etwa 90° beträgt.

4. Verfahren nach einem der vorhergehenden Ansprüche, **dadurch gekennzeichnet, dass** die Frequenz der Taktdifferenz um wenigstens zwei Zehnerpotenzen kleiner ist als die Frequenzen der ersten und der weiteren Taktsteuerung (16,17).

5. Verfahren nach einem der vorhergehenden Ansprüche, **dadurch gekennzeichnet, dass** die Wellenlänge des vom Lichtsender (12) und weiterem Lichtsender (15) ausgestrahlten Lichts im Infrarotbereich liegt.

6. Verfahren nach einem der vorhergehenden Ansprüche, **dadurch gekennzeichnet, dass** die Wellenlängen des vom Lichtsender (12) einerseits und vom weiteren Lichtsender (15) andererseits ausgestrahlten Lichts verschieden sind.

7. Verfahren nach Anspruch 6, **dadurch gekennzeichnet, dass** einer der Lichtsender (12,15) Licht mit einer Wellenlänge im Infrarotbereich abstrahlt und der andere Licht mit einer Wellenlänge im Rotbereich abstrahlt.

8. Verfahren nach Anspruch 6, **dadurch gekennzeichnet, dass** einer der Lichtsender (12,15) Licht mit einer Wellenlänge im Infrarotbereich abstrahlt und der andere Licht mit einer Wellenlänge im Blaubereich abstrahlt.

**Claims**

1. Method for light propagation time measurement, in particular for cameras (10), with the steps:

- transmitting a first light signal, clocked by a first clock control (16) from at least one light transmitter (12) into a light path (14) via a reflecting object (O) on to a photodiode (13),
- determining a received signal as a result of the first light signal at the photodiode (13),
- radiating a further light signal, clocked by a further clock control (17) and mixing with the first light signal to produce a common received signal (513).
- filtering the common received signal (S13) using a filter (25), the frequency response of which corresponds to a frequency of a clock, to produce a filter signal,
- using the received signal from the light path (14) to determine the propagation time of light with the steps:
- mixing the clock signals of the first clock control (16) and of the further clock control (17) also to produce a mixed signal in a mixer (30), and
- using the phase shift between the mixed signal of the clock controls (16, 17) and the filter signal to determine the propagation time of light,

**characterized in that**

- the further light signal is radiated into the photodiode (13) at an angle to the first light signal,
- the mixing oft he first light signal with the further light signal takes place in the photo diode.

2. Method according to claim 1, **characterized in that** the first light signal is radiated substantially frontally and the further light signal is radiated substantially laterally into the photodiode (13).

3. Method according to claim 2, **characterized in that** the angle between the radiation angle of the first light signal and of the further light signal is more than 45°, preferably more than 70°, particularly preferably approximately 90°.

4. Method according to any one of the preceding claims, **characterized in that** the frequency of the clock difference is smaller by at least two orders of magnitude than the frequencies of the first and the further clock controls (18, 17).

5. Method according to any one of the preceding claims, **characterized In that** the wavelength of the light emitted by the light transmitter (12) and the light emitted by the further light transmitter (15) is within the infrared range.

6. Method according to any one of the preceding claims, **characterized in that** the wavelengths of the light emitted by the light transmitter (12) on the one hand and by the further light transmitter (15) on the other hand are different.

7. Method according to claim 6, **characterized in that** one of the light transmitters (12,15) emits light with a wavelength in the infrared range and the other emits light with a wavelength in the red range.

8. Method according to claim 6, **characterized in that** one of the light transmitters (12,15) emits light with a wavelength in the infrared range and the other emits light with a wavelength in the blue range.

**Revendications**

1. Procédé de mesure du temps de propagation de la lumière, notamment pour des caméras (10), comprenant les étapes :

   - émission par au moins un émetteur de lumière (12) d'un premier signal lumineux cadencé par une première commande d'horloge (16) sur une photodiode (13), dans un trajet de lumière (14) passant par un objet réfléchissant (O),
   - détection d'un signal de réception suite au premier signal lumineux au niveau du récepteur (13),
   - injection d'un deuxième signal lumineux cadencé par une deuxième commande d'horloge (17) et mélange avec le premier signal lumineux pour obtenir un signal de réception commun (S13),
   - filtrage du signal de réception commun (S13) au moyen d'un filtre (25) dont la réponse en fréquence correspond à une fréquence d'une différence de cadence, pour obtenir un signal de filtre,
   - utilisation du signal de réception provenant du trajet de lumière (14) pour déterminer le temps de propagation de la lumière, comprenant les étapes :
   - mélange des signaux d'horloge de la première commande d'horloge (16) et de la deuxième commande d'horloge (17), également, pour former un signal mélangé dans un mélangeur (30) et

   - utilisation du décalage de phase entre le signal mélangé des commandes d'horloge (16, 17) et le signal de filtre pour déterminer le temps de propagation de la lumière,

   **caractérisé en ce que**

   - le deuxième signal lumineux est émis dans la photodiode (13) suivant un angle par rapport au premier signal lumineux,
   - le mélange du premier signal lumineux avec le deuxième signal lumineux se produit dans la photodiode.

2. Procédé selon la revendication 1, **caractérisé en ce que** le premier signal lumineux est émis de manière essentiellement frontale et le deuxième signal est émis de manière essentiellement latérale dans la photodiode (13).

3. Procédé selon la revendication 2, **caractérisé en ce que** l'angle d'émission entre le premier signal lumineux et le deuxième signal lumineux est supérieur à 45°, de préférence supérieur à 70° mais, de préférence encore, égal à peu près à 90°.

4. Procédé selon l'une des revendications précédentes, **caractérisé en ce que** la fréquence de la différence de cadence est inférieure d'au moins deux puissances de dix aux fréquences de la première et de la deuxième commande d'horloge (16, 17).

5. Procédé selon l'une des revendications précédentes, **caractérisé en ce que** la longueur d'onde de la lumière émise par l'émetteur de lumière (12) et le deuxième émetteur de lumière (15) est dans le domaine de l'infrarouge.

6. Procédé selon l'une des revendications précédentes, **caractérisé en ce que** les longueurs d'onde de la lumière émise par l'émetteur de lumière (12) d'une part et par le deuxième émetteur de lumière (15) d'autre part sont différentes.

7. Procédé selon la revendication 6, **caractérisé en ce qu'**un des émetteurs de lumière (12, 15) émet de la lumière à une longueur d'onde dans le domaine de l'infrarouge et l'autre émet de la lumière à une longueur d'onde dans le domaine du rouge.

8. Procédé selon la revendication 6, **caractérisé en ce qu'**un des émetteurs de lumière (12, 15) émet de la lumière à une longueur d'onde dans le domaine de l'infrarouge et l'autre émet de la lumière à une longueur d'onde dans le domaine du bleu.

EP 1 979 764 B1

Fig. 1

Fig. 2

Fig. 3a

Fig. 3b

Fig. 4

Fig. 5

Fig. 6

EP 1 979 764 B1

EP 1 979 764 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19902612 A1
- DE 10350489 A1
- WO 2004061639 A
- DE 10006493 A1
- DE 10322552 A1